Europäisches Patentamt

European Patent Office

Office européen des brevets

(19)

(11) Publication number: **0 024 860**
**B1**

# (12) EUROPEAN PATENT SPECIFICATION

(45) Date of publication of patent specification: **14.03.84**

(51) Int. Cl.³: **H 04 N 3/27**

(21) Application number: **80302817.4**

(22) Date of filing: **15.08.80**

(54) **Dual standard television vertical deflection system.**

(30) Priority: **23.08.79 GB 7929379**
**31.03.80 US 135557**

(43) Date of publication of application:
**11.03.81 Bulletin 81/10**

(45) Publication of the grant of the patent:
**14.03.84 Bulletin 84/11**

(84) Designated Contracting States:
**CH DE FR GB IT LI**

(56) References cited:
**FR - A - 2 175 038**
**GB - A - 972 303**
**GB - A - 1 102 583**
**US - A - 2 668 193**

(73) Proprietor: RCA CORPORATION
30 Rockefeller Plaza
New York, NY 10020 (US)

(72) Inventor: **Rutishauser, Ernst Arnold Oscar**
**Dorngasse 53**
**CH-8967 Widen (CH)**

(74) Representative: **Smith, Thomas Ian Macdonald**
**et al,**
**RCA International Limited Norfolk House (1st**
**Floor) 31 St. James Square**
**London SW1Y 4JR (GB)**

Courier Press, Leamington Spa, England.

## Dual standard television vertical deflection system

This invention relates to dual standard television receivers and in particular to a television receiver arrangement in which vertical deflection circuit parameters are automatically adjusted in dependence upon the scanning standards of the television signal being received so that the receiver may present a proper image display in response to signals of differing scanning standards.

With the advent of home video tape players and video disc players, there is an increased diversity of program sources available for supply of image information to a television receiver. If the receiver is provided with the facility for proper image display in response to television signals developed under differing scanning standards, the flexibility of use of the receiver is enhanced. Of main concern, in this regard, is the ability to provide proper image display in response to: (a) television signals of the type having a line frequency of 15,625 Hz. and a field frequency of 50 Hz., and (b) television signals of the type having a line frequency of approximately 15,750 Hz. and a field frequency of approximately 60 Hz. (the latter type being viewed as inclusive of signals of the type where line frequency is particularly 15,734.26 Hz. and field frequency is particularly 59.94 Hz.).

Most commercially available (single-standard) television receivers designed for normal operation in response to signals of type (a) above, when supplied with signals of type (b), operate as follows: (1) in view of the close similarity of line frequencies, properly synchronized operation of the receiver's line (horizontal) deflection system is achieved, and image display is effected with proper picture width; (2) properly synchronized operation of the receiver's field (vertical) deflection system is achieved, but image display is effected with an objectionable reduction in picture height (of the order of 10% to 20%). In others of such commercially available receivers, the picture height reduction problem is accompanied by occasional inability to achieve properly timed vertical triggered (with the latter problem subject to remedy by vertical hold adjustment, but only if such a facility is incorporated in the receiver design).

It has been proposed in GB 972303 to maintain a substantially constant picture height by providing a free-running frame oscillator having a boot-strap capacitor the rate of charge of which is controlled in accordance with the amplitude of the generated sawtooth waveform such that as the sawtooth waveform increases in amplitude, the rate of charging of the capacitor is decreased and therefore tends to maintain the waveform amplitude constant. In contrast to this the present invention automatically effects deflection circuit parameter adjustments in appropriate dependence upon the scanning standards of the signal being received. Thus, the receiver properly synchronizes image displays of proper picture dimensions in response to signals of differing scanning standards.

In accordance with the present invention, there is provided an image display apparatus having a field deflection system for alternatively (1) displaying images in response to composite video signals having a first field frequency and inclusive of field synchronizing pulses having a first repetition rate corresponding to said first field frequency, and (2) displaying images in response to composite video signals having a second field frequency, higher than said first field frequency, and inclusive of field synchronizing pulses having a second repetition rate corresponding to said second field frequency. The field deflection system comprises a field deflection winding, developing means subject to synchronization by the field synchronizing pulses of composite video signals applied to the image display system, and oscillator means, incorporating a capacitor and a charging impedance therefor, for developing field frequency scanning current waves for passage through the deflection winding. These current waves have a fundamental frequency corresponding to the repetition rate of the field synchronizing pulses which effect synchronization of the developing means: the developing means has a free-running frequency lower than the first repetition rate in the absence of the synchronizing pulses. The apparatus is characterised by: identifying means, responsive to the field frequency of said current waves, for developing an output voltage of a first level when said current waves have a fundamental frequency corresponding to said first repetition rate and an output voltage of a second level, different from said first level, when said current waves have a fundamental frequency corresponding to said second repetition rate; a switching device responsive to the output voltage of said identifying means, exhibiting a first switching state when said output voltage is at said first level, and exhibiting a second switching state when said output voltage is at said second level; and altering means responsive to the switching state of said switching device for altering said capacitor charging impedance of said developing means in dependence upon said switching state, in such a manner that the amplitude of the current waves developed during synchronization of said developing means by pulses of said first repetition rate substantially matches the amplitude of the current waves developed during synchronization of said developing means by pulses of said second repetition rate, said altering means also simultaneously increasing the free running frequency of said developing means to improve synchronization of said developing means by synchronizing pulses of said second repetition rate.

In accordance with an illustrative embodiment of the present invention, a tone decoder phase locked loop (PLL) is rendered responsive to the voltage developed across a sampling resistor in the path of the receiver's vertical scanning current. The PLL is tuned to exhibit a first output state when the fundamental frequency of the vertical deflection sawtooth waveform variations corresponds to the (50 Hz.) field frequency of signals of type (a) above, and to exhibit a second output state when the fundamental frequency of the vertical deflection sawtooth waveform variations corresponds to the (60 Hz.) field frequency of signals of type (b) above. A switch is associated with elements forming the capacitor charging impedance of a sawtooth wave generator whose output controls the timing and amplitude of the sawtooth current waves energizing the vertical deflection windings. The switching state of the switch is rendered responsive to the PLL output state in such manner that when the lower (50 Hz.) field frequency is identified, the effective charging impedance is of a given magnitude, whereas, when the higher (60 Hz.) field frequency is identified, the effective charging impedance is altered to a second magnitude, lower than said given magnitude. With proper proportioning of the respective impedance magnitudes, the amplitude of the sawtooth generator output at the higher triggering rate substantially matches the amplitude of the sawtooth generator output at the lower triggering rate.

Advantageously, this technique of amplitude control can also effect an appropriate alteration in the free-running frequency of a vertical oscillator regeneratively associated with the capacitor charging circuit, whereby reliable synchronization of the oscillator by vertical synchronizing pulses at the respective field frequencies can be assured.

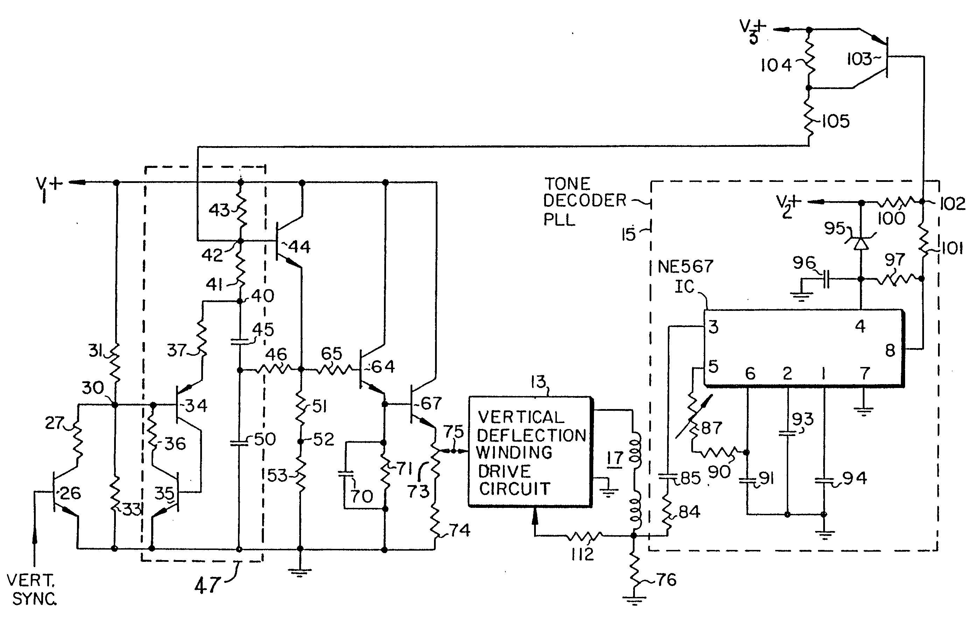

In the sole figure of the accompanying drawing, there is shown, partially schematically and partially by block representation, a dual-standard television receiver vertical deflection system incorporating parameter control apparatus embodying the principles of the present invention.

In the illustrated vertical deflection circuitry, a vertical oscillator 47 comprises a capacitor charging circuit which includes a first charging resistor 43, a second charging resistor 41, a capacitor 45, and a capacitor 50, serially connected in the order named between the positive terminal ($V_1+$) and the negative terminal (illustratively, ground) of a unidirectional voltage supply. A discharging path for the capacitors includes the series combination of a small value resistor 37, the emitter-to-collector path of a PNP discharge transistor 34, and the base-to-emitter path of an NPN transistor 35, with the series combination connected between the junction (40) of resistor 41 and capacitor 45 and ground. Biasing for the base of transistor 34 is provided by a voltage divider formed by resistors 31 and 33, serially connected between the $V_1+$ terminal and ground, with the junction (30) of the resistors directly connected to the base of transistor 34. Regenerative coupling of transistors 34 and 35 is provided via a resistor 36 connected between the collector of transistor 35 and the base of transistor 34.

Resistor 33 is shunted by the series combination of a resistor 27 and the collector-to-emitter path of an NPN transistor 26, which receives, at its base, positive-going vertical synchronizing pulses derived from a composite video signal received by the receiver's sync separator circuitry (not shown).

An NPN transistor 44 is connected as an emitter-follower, with its collector connected to the V+ supply terminal, its base directly connected to the junction (42) of charging resistors 43 and 41, and its emitter returned to ground via serially connected resistors 51 and 53. For conventional S-correction purposes, an additional charging path for capacitor 50 is provided via a resistor 46 connected between the emitter of transistor 44 and the junction of capacitors 45 and 50. The junction (52) of resistors 51 and 53 provides a takeoff point for an input to the receiver's vertical blanking circuitry (not shown).

The output of emitter-follower connected transistor 44 is coupled via resistor 65 to the base of an NPN transistor 64, connected as an emitter-follower, with its collector connected to the $V_1+$ supply terminal and its emitter returned to ground via a resistor 71, shunted by a capacitor 70. The emitter of transistor 64 provides a takeoff point for an input to the receiver's east-west (side) pincushion correction circuits (not shown). An output emitter-follower is formed by an NPN transistor 67, with its base directly connected to the emitter of transistor 64, with its collector connected to the $V_1+$ supply terminal, and with its emitter returned to ground via the series combination of the resistive element of a height control potentiometer 73 and a resistor 74.

At the adjustable tap of potentiometer 73 appears an S-corrected sawtooth wave of adjustable magnitude, which is delivered to an input terminal (75) of the vertical deflection winding drive circuit 13 (for which schematic details are not shown). The drive circuit 13 supplies an output current (controlled in timing, waveshape, and amplitude by the input at terminal 75) to the series combination of the vertical deflection windings 17 of the receiver's deflection yoke and a vertical scanning current sampling resistor 76. Feedback of the voltage across resistor 76 to drive circuit 13, for conventional linearizing purposes, is provided via a feedback resistor 112.

The circuitry of the illustrated vertical deflection system, as thus far described, is of a conventional form. The charging circuit elements 43, 41, 45, 50 cooperate with elements 31, 33, 34, 35, 36, 37 in a regenerative fashion to form a vertical oscillator 47. Illustratively, the free-running frequency of the oscillator 47 is less than 50 Hz. (e.g., 43 Hz.), and is readily subject to synchronized operation at 50 Hz., when vertical synchronizing pulses from a signal of type (a) above are supplied to transistor 26. Between synchronizing pulses, transistors 34 and 35 are non-conducting, and capacitors 45 and 50 are charged via resistors 43 and 41 in series. When a sync pulse causes transistor 26 to conduct, transistor 34 is biased into conduction turning on transistor 35 which latches transistor 34 in a conducting mode. Discharge of capacitors 45 and 50 via discharge path elements 37, 34, 35 continues until the potential at junction 40 drops sufficiently to cut off transistor 34. The charging portion of the cycle then recommences.

Now to be described are the additional circuit elements of the illustrated system which provide the vertical deflection circuitry with its desired dual-standard capabilities.

A tone decoder phase-locked-loop (PLL 15) of a conventional design receives as an input (via the series combination of a resistor 84 and capacitor 85) the voltage across the scanning current sampling resistor 76. For illustrative schematic details, PLL 15 is shown as employing a Signetics Type NE567 integrated circuit with external circuit connections, as follows: respective capacitors 91, 93, 94 and 96 linking chip terminals 6, 2, 1 and 4, respectively, to ground; chip terminal 7 directly grounded. Chip terminal 4 is connected via zener diode 95 to the $V_2+$ supply terminal; resistor 97 interconnects chip terminals 4 and 8; the series combination of variable resistor 87 and resistor 90 interconnects chip terminals 5 and 6. Chip terminal 8, which is the output terminal, is connected to the $V_2+$ supply terminal via the series combination of resistors 101 and 100. Chip input terminal 3 accepts the input from sampling resistor 76.

Variable resistor 87 is illustratively adjusted to tune PLL 15 to 60 Hz., whereby PLL 15 is activated when the fundamental frequency of the scanning waveform sampled by resistor 76 corresponds to the field frequency (approximately 60 Hz.) of a signal of type (b) above. The voltage at chip output terminal 8 goes "low" under such conditions. In contrast, when the fundamental frequency of the sampled scanning waveform corresponds to the type (a) field frequency (50 Hz.), PLL 15 is not activated, and the voltage at the chip output terminal 8 goes "high."

A PNP switching transistor 103 is disposed with its base connected to the junction (102) of the PLL output resistors 100 and 101, with its emitter connected to the $V_3+$ supply terminal, and with its collector connected via a resistor 105 to a junction 42 of charging resistors 43 and 41. A resistor 104 shunts the emitter-to-collector path of transistor 103.

If desired, a single source may be used to provide the supplies to the $V_1$, $V_2$ and $V_3$ terminals.

When chip terminal 8 goes low, in response to a 60 Hz. signal, transistor 103 is switched into a saturated state, effectively shorting out resistor 104. Under these circumstances, charging resistor 43 is shunted by the impedance of resistor 105 alone. When chip terminal 8 goes high, however, transistor 103 is switched into a non-conducting state, whereby charging resistor 43 is shunted by the higher impedance of the series combination of resistors 104 and 105.

Thus, when the vertical oscillator 47 is synchronized for 60 Hz. operation by synchronizing pulses from type (b) signals, the effective charging impedance in the main charging path for capacitors 45 and 50 is lowered in magnitude relative to the effective charging impedance magnitude presented in the main charging path when the oscillator is synchronized for 50 Hz. operation by synchronizing pulses from type (a) signals. By proper resistor proportioning, the charging impedance alteration can be made to just compensate for the effect on sawtooth amplitude of the reduction in charging time, whereby the same sawtooth amplitude is obtained for both 50 Hz. and 60 Hz. operation.

The charging impedance alteration also has the beneficial effect of raising the free-running frequency of the vertical oscillator 47 when shifting from 50 Hz. operation to 60 Hz. operation. With the values of resistors listed below, the free-running frequency shift is from 45 Hz. (when switching transistor 103 is off, and the series combination of resistors 104, 105 shunts charging resistor 43) to 54 Hz. (when switching transistor 103 shorts out resistor 104). Such a frequency shift assures efficiency of synchronization for both modes of operation, and can avoid undesirable rolling effects that might otherwise accompany a momentary loss of synchronizing information when operating at the higher field frequency.

In the embodiment of the invention, described above, the (transistor 103) switching system that responds to the field frequency identifier (PLL 15) controls charging impedance magnitude to effect the desired sawtooth amplitude compensation. Alternatives to the charging impedance control are possible, including the following: (1) controlling the magnitude of the unidirectional charging potential supplied to the charging network 43, 41, 45, 50 (as by dropping the $V_1+$ supply potential via a dropping resistor during 50 Hz. operation, and shorting the dropping resistor with a switching device during 60 Hz. operation); (2) effecting switch control of impedance in shunt or series with the height control potentiometer 73; (3) effecting switch control of impedance in shunt or series with the sampling resistor 76; and (4) effecting switch control of impedance in shunt or series with feedback resistor 112.

In the use of alternatives (2), (3) and (4), it will be noted that amplitude compensation is effected at a point in the system subsequent to pincushion correction drive takeoff. Under such circumstances, optimum drive for the pincushion corrector can be provided for only one of the two field frequency standards. It may also be noted that the advantageous shift of the free-running frequency of the vertical oscillator 47 provided by the illustrated embodiment does not accompany the amplitude compensation when effected by alternatives (2), (3) and (4). Alternative (1) is less power efficient than the illustrated embodiment. A simple transistor switch will not be sufficient for alternative (4), which requires a bidirectional switching device (e.g., a microrelay).

In the illustrated embodiment, sampling resistor 76 provides a convenient, low impedance source of input drive for the field frequency identifying PLL 15. However, when the sampling resistor is used as such a source, the oscillator should be capable of being reliably triggered by the higher frequency synchronizing pulses with transistor 103 in either of its switching states. An alternative source of input drive for PLL 15 comprises the sync separator circuits of the receiver. While use of such an alternative source can assure achievement of field frequency identification with independence of the oscillator locking characteristics, more complex coupling circuitry (e.g., inclusive of an impedance transforming stage, such as an emitter-follower) will typically be required.

Illustrative parameter values for the circuitry of the drawing comprise the following:

| | |
|---|---|
| Resistor 27 | 1.8 kilohms |
| Resistor 31 | 1.8 kilohms |
| Resistor 33 | 2.2 kilohms |
| Resistor 36 | 68 ohms |
| Resistor 37 | 27 ohms |
| Resistor 41 | 10 kilohms |
| Resistor 43 | 82 kilohms |
| Resistor 46 | 6.8 kilohms |
| Resistor 51 | 4.7 kilohms |
| Resistor 53 | 4.7 kilohms |
| Resistor 65 | 470 ohms |
| Resistor 71 | 10 kilohms |
| Resistor 74 | 4.7 kilohms |
| Resistor 76 | 1 ohm |
| Resistor 84 | 1 kilohm |
| Resistor 87 | 2 kilohms (max.) |
| Resistor 90 | 10 kilohms |
| Resistor 97 | 39 kilohms |
| Resistor 100 | 2.2 kilohms |
| Resistor 101 | 22 kilohms |
| Resistor 104 | 1.5 megohms |
| Resistor 105 | 330 kilohms |
| Resistor 112 | 10 kilohms |

| | |
|---|---|
| Potentiometer 73 | 5 kilohms |
| Capacitor 45 | 0.68 microfarads |
| Capacitor 50 | 0.68 microfarads |
| Capacitor 70 | 82 nanofarads |
| Capacitor 85 | 0.33 microfarads |
| Capacitor 91 | 1.5 microfarads |
| Capacitor 93 | 10 microfarads |
| Capacitor 94 | 22 microfarads |
| Capacitor 96 | 22 microfarads |

**Claims**

1. Image display apparatus having a field deflection system for alternatively (1) displaying images in response to composite video signals having a first field frequency and inclusive of field synchronizing pulses having a first repetition rate corresponding to said first field frequency, and (2) displaying images in response to composite video signals having a second field frequency, higher than said first field frequency, and inclusive of field synchronizing pulses having a second repetition rate corresponding to said second field frequency; said field deflection system comprising a field deflection winding (17), developing means (47) subject to synchronization by the field synchronizing pulses of composite video signals applied to said image display system, and oscillator means, Incorporating a capacitor (45, 50) and a charging impedance therefor (41, 43), for developing field frequency scanning current waves for passage through said deflection winding, said current waves having a fundamental frequency corresponding to the repetition rate of the field synchronizing pulses effecting synchronization of said developing means, and said developing means having a free running frequency lower than said first repetition rate in the absence of said synchronizing pulses; characterised by: identifying means (15), responsive to the field frequency of said current waves, for developing an output voltage of a first level when said current waves have a fundamental frequency corresponding to said first repetition rate and an output voltage of a second level, different from said first level, when said current waves have a fundamental frequency corresponding to said second repetition rate; a switching device (103), responsive to the output voltage of said identifying means (15), and exhibiting a first switching state when said output voltage is at said first level, and exhibiting a second switching state when said output voltage is at said second level; and altering means (104, 105), responsive to the switching state of said switching device (103), for altering said capacitor charging impedance of said developing means (47), in dependence upon said switching state, in such a manner that the amplitude of the current waves developed during synchronization of said developing means by pulses of said first repetition rate substantially matches the amplitude of the current waves developed during synchronization of said developing means by pulses of said second repetition rate; said altering means also simultaneously increasing the free running frequency of said developing means to improve synchronization of said developing means by synchronizing pulses of said second repetition rate.

2. Apparatus in accordance with claim 1, characterised in that said oscillator includes: a source of charging potential $(V_1)$; a capacitance (45, 50); a charging resistor (43); said capacitance and said charging resistor being coupled in series across said source of charging potential; wherein said switching device comprises a transistor (103) having base, emitter and collector electrodes, with said base electrode rendered responsive to said output voltage; wherein said altering means includes a pair of resistors (104, 105) connected to form a series combination, with said series combination connected in shunt with said charging resistor (43), and means for connecting the emitter-collector path of said transistor in shunt with one (104) of said pair of resistors.

3. Apparatus in accordance with claim 2, characterized in that said oscillator also includes a selectively enabled capacitance discharge path (34, 37, 35) shunting said capacitance (45, 50); said apparatus also including means (26) for selectively enabling said discharge path in response to the occurrence of one of said field synchronizing pulses.

4. Apparatus in accordance with claim 1, characterized by a scanning current sampling resistor (76) serially connected with said deflection winding (17) in the path of said current waves; and wherein said identifying means (15) has an input terminal (3) rendered responsive to the voltage appearing across said sampling resistor.

## Revendications

1. Dispositif de visualisation d'une image ayant un système de déviation verticale pour alternativement (1) visualiser des images en réponse à des signaux vidéo composites ayant une première fréquence de balayage vertical et comprenant des impulsions de synchronisation verticale ayant une première fréquence de récurrence correspondant à ladite première fréquence de balayage vertical, et (2) visualiser des images en réponse à des signaux vidéo composites ayant une second fréquence verticale, supérieure à ladite première fréquence verticale, et comprenant des impulsions de synchronisation verticale ayant une seconde fréquence de récurrence correspondant à ladite seconde fréquence de balayage vertical; ledit système de déviation verticale comprenant un enroulement de déviation verticale (17), un moyen de développement (47) sujet à une synchronisation par les impulsions de synchronisation verticale des signaux vidéo composites appliqués audit système de visualisation de l'image, et un moyen oscillateur où est incorporé un condensateur (45, 50) et son impédance de charge (41, 43) pour développer des ondes de courant de balayage à la fréquence de déviation verticale pour passage à travers ledit enroulement de déviation, lesdites ondes de courant ayant une fréquence fondamentale correspondant à la fréquence de récurrence des impulsions de synchronisation verticale effectuant la synchronisation dudit moyen de développement, et ledit moyen de développement ayant une fréquence autonome plus faible que ladite première fréquence autonome plus faible que ladite première fréquence de récurrence en l'absence desdites impulsions de synchronisation; caractérisé par: un moyen d'identification (15), répondant à la fréquence de balayage vertical desdites ondes de courant, pour développer une tension de sortie à un premier niveau quand lesdites ondes de courant ont une fréquence fondamentale correspondant à ladite première fréquence de récurrence et une tension de sortie à un second niveau, différent dudit premier niveau quand lesdites ondes de courant ont une fréquence fondamentale correspondant à ladite seconde fréquence de récurrence; un dispositif de commutation (103) répondant à la tension à la sortie dudit moyen d'identification (15) et présentant un premier état de commutation quand ladite tension de sortie est audit premier niveau, et présentant un second état de commutation quand ladite tension de sortie est audit second niveau; et un moyen de modification (104, 105) répondant à l'état de commutation dudit dispositif de commutation (103) pour modifier ladite impédance de charge du condensateur dudit moyen de développement (47) selon ledit état de commutation, de façon que l'amplitude des ondes de courant développées pendant la synchronisation dudit moyen de développement par les impulsions à la première fréquences de récurrence corresponde sensiblement à l'amplitude des ondes de courant développées pendant la synchronisation dudit moyen de développement par les impulsions à la seconde fréquence de récurrence; ledit moyen de modification augmentant également simultanément la fréquence autonome dudit moyen de développement pour améliorer la synchronisation dudit moyen de développement par des impulsions de synchronisation à ladite seconde fréquence de récurrence.

2. Dispositif selon la revendication 1, caractérisé en ce que ledit oscillateur comprend: une source de potentiel de charge $(V_1)$; une capacité (45, 50); une résistance de charge (43); ladite capacité et ladite résistance de charge étant couplées en série à ladite source de potentiel de charge; où ledit dispositif de commutation comprend un transistor (103) ayant des électrodes de base, d'émetteur et de collecteur, ladite électrode de base étant rendue sensible à ladite tension de sortie; où ledit moyen de modification comprend une paire de résistances (104, 105) connectées pour former une combinaison en série, ladite combinaison en série étant connectée en shunt avec ladite résistance de charge (43), et un moyen pour connecter le trajet émetteur-collecteur dudit transistor en shunt avec l'une (104) de ladite paire de résistances.

3. Dispositif selon la revendication 2, caractérisé en ce que ledit oscillateur comprend également un trajet de décharge de condensateur sélectivement validé (34, 37, 35) shuntant ledit condensateur (45, 50); ledit dispositif comprenant également un moyen (26) pour valider sélectivement ledit trajet de décharge en réponse à la présence de l'une desdites impulsions de synchronisation verticale.

4. Dispositif selon la revendication 1, caractérisé par une résistance d'échantillonnage du courant de balayage (76) connectée en série avec ledit enroulement déflecteur (17) dans le trajet desdites ondes de courant; et en ce que ledit moyen d'identification (15) a une borne d'entrée (3) rendue sensible à la tension apparaissant dans ladite résistance d'échantillonnage.

## Patentansprüche

1. Bildwiedergabegerät mit einer Halbbild-Ablenkeinrichtung zum alternativen (1) Wiedergeben von Bildern in Ansprache auf ein Videosignalgemisch, das eine erste Halbbildfrequenz hat und Halbbild-Synchronisierimpulse mit einer ersten Wiederholungsfrequenz entsprechend der ersten Halbbildfrequenz enthält, und (2) Wiedergeben von Bildern in Ansprache auf ein Videosignalgemisch, das eine zweite Halbbildfrequenz, die höher als die erste Halbbildfrequenz ist, hat und Halbbild-Synchronisierimpulse mit einer zweiten Wiederholungsfrequenz entsprechend der zweiten Halbbildfrequenz enthält, wobei die Halbbild-Ablenkeinrichtung eine Halbbild-Ablenkwicklung (17), eine durch die Halbbild-Synchronisierimpulse des dem Bildwiedergabegerät zugeführten Videosignalgemisches synchronisierbare Erzeugungsanordnung (47) und eine Oszillatoranordnung, die einen Kondensator (45, 50) une eine Ladeimpedanz (41, 43) für diesen enthält, aufweist, um halbbildfrequente Ablenkstromschwingungen zum Hindurchleiten durch die Ablenkwicklung zu erzeugen, welche eine Grundfrequenz entsprechend der Wiederholungsfrequenz der Halbbild-Synchronisierimpulse haben, welche die Synchronisation der Erzeugungsanordnung bewirken, und wobei die Erzeugungsanordnung in Abwesenheit der Synchronisierimpulse eine Freilauffrequenz hat, die niedriger als die erste Wiederholungsfrequenz ist, gekennzeichnet durch eine auf die Halbbildfrequenz der Stromschwingungen ansprechende Identifizieranordnung (15) zum Erzeugen einer Ausgangsspannung eines ersten Wertes, wenn die Stromschwingungen eine Grundfrequenz entsprechend der ersten Wiederholungsfrequenz haben, und einer Ausgangsspannung eines zweiten, vom ersten Wert verschiedenen Wertes, wenn die Stromschwingungen eine Grundfrequenz entsprechend der zweiten Wiederholungsfrequenz haben; eine Schaltvorrichtung (103), die auf die Ausgangsspannung der Identifizieranordnung (15) anspricht und einen ersten Schaltzustand aufweist, wenn die Ausgangsspannung den ersten Wert hat, und einen zweiten Schaltzustand aufweist, wenn, die Ausgangsspannung den zweiten Wert hat; eine Änderungsanordnung (104, 105) die auf den Schalzustand der Schaltvorrichtung (103) anspricht um die Kondensatorladeimpedanz der Erzeugungsanordnung (47) in Abhängigkeit vom Schaltzustand derart zu ändern, daß die Amplitude der Amplitude der Stromschwingungen, die während der Synchronisation der Erzeugungsanordnung durch Impulse der ersten Widerholungsfrequenz erzeugt werden, im wesentlichen mit der Amplitude der Stromschwingungen übereinstimmt, die während der Synchronisation der Erzeugungsanordnung durch Impulse der zweiten Wiederholungsfrequenz erzeugt werden; wobei die Änderungsanordnung außerdem gleichzeitig die Freilauffrequenz der Erzeugungsanordnung erhöht, um die Synchronisation der Erzeugungsanordnung durch die Synchronisierimpulse der zweiten Wiederholungsfrequenz zu verbessern.

2. Gerät nach Anspruch 1, dadurch gekennzeichnet, daß der Oszillator enthält: eine Quelle für ein Ladepotential ($V_1$); eine Kapazität (45, 50); einen Ladewiderstand (43); daß die Kapazität und der Ladewiderstand in Reihe an die Ladepotentialquelle angeschlossen sind; daß Schaltvorrichtung einen Transistor (103) mit Basis-, Emitter- und Kollektorelektrode enthält, wobei die Basiselektrode durch die Ausgangsspannung gesteuert ist; daß die Änderungsanordnung zwei Widerstände (104, 105) die unter Bildung einer dem Ladewiderstand (43) parallel geschalteten Reihenschaltung verbunden sind, und eine Anordnung zur Parallelschaltung der Emitter-Kollektor-Strecke des Transistors mit einem (104) der beiden Widerstände enthält.

3. Gerät nach Anspruch 2, dadurch gekennzeichnet, daß der Oszillator außerdem einen selektiv eingeschalteten Kapazitätsentladungsweg (34, 37, 35) enthält, der die Kapazität (45, 50) überbrückt; daß das Gerät außerdem eine Anordnung (26) zum selektiven Einschalten des Entladungsweges in Ansprache auf das Auftreten eines der Halbbild-Synchronisierimpulse enthält.

4. Gerät nach Anspruch 1, gekennzeichnet durch einen Ablenkstrom-Abgreifwiderstand (76), der der Ablenkwicklung (17) im Weg der Stromschwingungen in Reihe geschaltet ist, wobei die Identifizieranordnung (15) eine Eingangsklemme (3) aufweist, die auf die Spannung am Abgriefwiderstand anspricht.